# EUROPEAN PATENT SPECIFICATION

(11) **EP 3 067 275 B1**
(45) Date of publication and mention of the grant of the patent: **03.01.2018**
(21) Application number: 15158974.4
(22) Date of filing: 13.03.2015
(51) Int. Cl.: B64D 11/06, B60N 3/00

(54) **A FOLDING TABLE ARRANGEMENT FOR A VEHICLE SEAT BACK**
KLAPPTISCHANORDNUNG FÜR EINE FAHRZEUGSITZRÜCKENLEHNE
AGENCEMENT DE TABLE PLIANTE POUR UN DOSSIER DE SIÈGE DE VÉHICULE

(43) Date of publication of application: 14.09.2016
(73) Proprietor: Volvo Car Corporation, 40531 Göteborg (SE)
(72) Inventor: Ekhem, Alexander, 519 90 Horred (SE); Guldstrand, Peter, 438 92 Härryda (SE)
(74) Representative: Volvo Car Corporation

(56) References cited:
- EP-A1- 0 990 556
- WO-A1-2004/113168
- DE-U1- 20 016 393
- DE-U1- 29 908 621
- FR-A1- 2 829 976

## Description

### TECHNICAL FIELD

The invention relates to a folding table arrangement for a vehicle seat back including a table leaf unit which is movable between a stowed position and a substantially horizontal in-use position.

### BACKGROUND

Folding table arrangements for vehicle seat backs are well known in prior art both for commercial airliner seats and to some degree also for automobile seats, at least for premium-class passenger cars. Particularly within the aircraft sector, there are many ingenious ways to combine useful functional aspects into such a table in order to facilitate passenger travelling convenience. An example of such a folding table is described in US. Patent document US2014183910. The folding mechanism for this table is common generic type, where the table is simply hinged in its lower side and folded out by gravity when a release button is pressed on the seat back panel. The passenger must hold the table as it is released and finally settles in a horizontal in-use position. A problem with this simple and straightforward folding mechanism is that the table may accidentally slam down into its horizontal position if the passenger just presses the release button and fails to receive the table with his or her hands. This causes extra stress to the folding mechanism which may potentially fail after many fold-out/fold-in cycles and is also often perceived as disturbing to the passenger. Another common general type of folding table is exemplified in European Patent Application EP0990556A1 in which the table leaf is provided with guide elements or slider blocks that can slide in a pair of mutually-facing channels disposed on opposite sides of a recess in the seat back. At a first location, typically at the lowest extreme of its sliding movement, the table leaf can be pivoted between a stowed position and a tilted, in-use position. One advantage of the folding table according to EP0990556A1 is that the table leaf has to be pulled upwards and toward the passenger as it is deployed in its tilted in-use position, thus avoiding the risk of having the table leaf inadvertently slamming down into the horizontal in-use position which could happen in the folding table according to US 2014183910. However, in EP0990556A1 the passenger still has to physically pull the table up into its tilted in-use position.

### SUMMARY

Consequently, an object of the invention is to provide a folding table arrangement for a vehicle seat back assembly which solves the above-mentioned problems related to prior art and offers a smooth, dampened semi-automatic fold-out mechanism for the folding table and a space-saving folding mechanism which ensures a positive locking of the table in its in-use position. The object is achieved by a folding table arrangement for a vehicle seat back including a table leaf unit which is movable between a stowed position and a substantially horizontal in-use position. Two support brackets are positioned on each lateral side of the table leaf unit, each support bracket being provided with a guide rail adapted for sliding engagement with a guide pin protruding from each lateral side of the table leaf unit. The guide rail further includes a fold-out track extending upwardly from a lower end to an upper end thereof, said lower end forming a parking position for the guide pin in said stowed position of the table leaf unit. The invention is especially characterized in that:
- two coaxially arranged swivel pins, one protruding from each lateral side of the table leaf unit, are provided at a distance from and parallel with said guide pins;
- the guide rail further includes a separate fold-in return track having a curved upper track section, the mean radius of which corresponds to the axial distance between the swivel pin and the guide pin;
- said fold-in return track also includes a substantially straight lower track section ending in said parking position for the guide pin in the stowed position of the table leaf unit.

In a preferable embodiment of the invention, the guide pin is spring biased towards a bottom surface of the guide rail, and that said fold-in return track at least partially extends in a different plane than the fold-out track, forming a negative step for the guide pin where it leaves the fold-out track and enters the fold-in return track, hence preventing the guide pin from re-entering the fold-out track once it has passed said step.

In an advantageous embodiment of the invention, the guide pin is spring biased towards a bottom surface of the guide rail by means of a spring member mounted in the table leaf unit.

The swivel pin is preferably operationally connected to a biasing member adapted to force-bias said swivel pin in an upward direction defined by a swivel pin guide rail provided on said support bracket.

Advantageously, each swivel pin is hinged in a slide block adapted to move along the swivel pin guide rail, said slide block being operatively connected to the biasing member. In a beneficial embodiment, each biasing member is a gas cylinder piston assembly, but may alternatively be a spring biased piston assembly.

In a preferred embodiment of the invention, the fold-out track and the swivel pin guide rail are angled relative to each other. The relative angle between the fold-out track and the swivel pin guide rail is between 3-15 degrees and preferably between 5-8 degrees.

A suitable embodiment of the invention is characterized in that:
- a track switching member is located in the straight lower track section of the fold-in return track, said track switching member having a guide surface being spring-biased towards an opposite side surface of the fold-in return track and having a wedge shaped end portion;
- said track switching member being adapted to let the guide pin pass on its way along the straight lower track section of the fold-in return track and snap back towards said opposite side surface of the fold-in return track when the guide pin has passed the track switching member into the parking position for the guide pin in the stowed position of the table leaf unit, hence preventing the guide pin from re-entering the fold-in return track once it has passed the track switching member.

Advantageously, a spring-biased upper locking latch is adapted to secure the slide block in an upper position in the swivel pin guide rail when the table leaf unit is in its in-use position. The upper locking latch is suitably operatively connected to a release mechanism adapted to be operated by a user when the table leaf unit is to be folded back into its stowed position.

The invention can be applied in different types of vehicles, such as cars, trucks, buses and construction equipment. Although the invention will be described with respect to an application in the form of a car, the invention is not restricted to this particular type of vehicle, but may be used in other vehicles.

Further advantages and advantageous features of the invention are disclosed in the following description and in the dependent claims.

### BRIEF DESCRIPTION OF THE DRAWINGS

With reference to the appended drawings, below follows a more detailed description of a suitable embodiment of the invention as an example.
Fig. 1 shows a perspective view of a vehicle seat back provided with a folding table arrangement according to the invention. The table leaf is shown in its in-use position.
Fig. 2 shows an enlarged perspective view of the folding table arrangement where a plastic cover frame as seen in Fig. 1 has been removed for the sake of clarity in order to display the underlying folding mechanism with two support brackets.
Fig. 3 shows a side view of the left half of the folding mechanism where the table leaf unit is shown in its stowed position. The vehicle seat back has been removed for the sake of clarity.
Fig. 4 is a side view of the folding mechanism in a position where the table leaf unit has just been released from its stowed position and the guide pin is moved from its parking position.
Fig. 5 is a side view of the folding mechanism in a position where the table leaf unit has progressed about a third of the total length of the fold-out track in the support bracket on its way towards the in-use position.
Fig. 6a is a side view of the folding mechanism in a position where the table leaf unit has progressed almost two-thirds of the total length of the fold-out track in the support bracket on its way towards the in-use position. A spring biased upper locking latch has just been forced to ride along a side of a slide block in which the swivel pin is hinged.
Fig. 6b shows an enlarged cut-out view of the locking latch and the side of a swivel pin guide rail as seen in Fig. 6a.
Fig. 6c shows a side view of the folding mechanism in the same position as in Fig 6a, but with a cover plate mounted over the slide block and with a mounted biasing member in the form of a gas cylinder piston assembly.
Fig. 7a shows a side view of the folding mechanism where the table leaf unit is shown in its horizontal in-use position. Again, the vehicle seat back has been removed for the sake of clarity.
Fig. 7b shows a side view of the folding mechanism in the same position as in Fig 6a, but with a cover plate mounted over the slide block and with a mounted biasing member in the form of a gas cylinder piston assembly.
Fig. 7c shows an enlarged cross-sectional view of how the guide pin is spring-biased towards a bottom surface of the guide rail.
Fig. 8 shows a perspective view of the folding mechanism in its in-use position.
Fig. 9 shows a cut-out simplified view of a track-switching member being pushed aside by the guide pin on its way downwards along the straight lower section of the fold-in return track of the guide rail.
Fig. 10 shows a perspective view of the folding mechanism still in its in-use position but shown from the reverse side of the support bracket, illustrating the springs used to spring-bias the upper locking latch and the track switching member.
Fig. 11 finally shows a perspective view of the folding mechanism still in its in-use position clearly showing the table leaf unit abutting the end-position abutment of the support bracket and with the cover plate removed for further clarity.

### DETAILED DESCRIPTION OF EXAMPLE EMBODIMENTS OF THE INVENTION

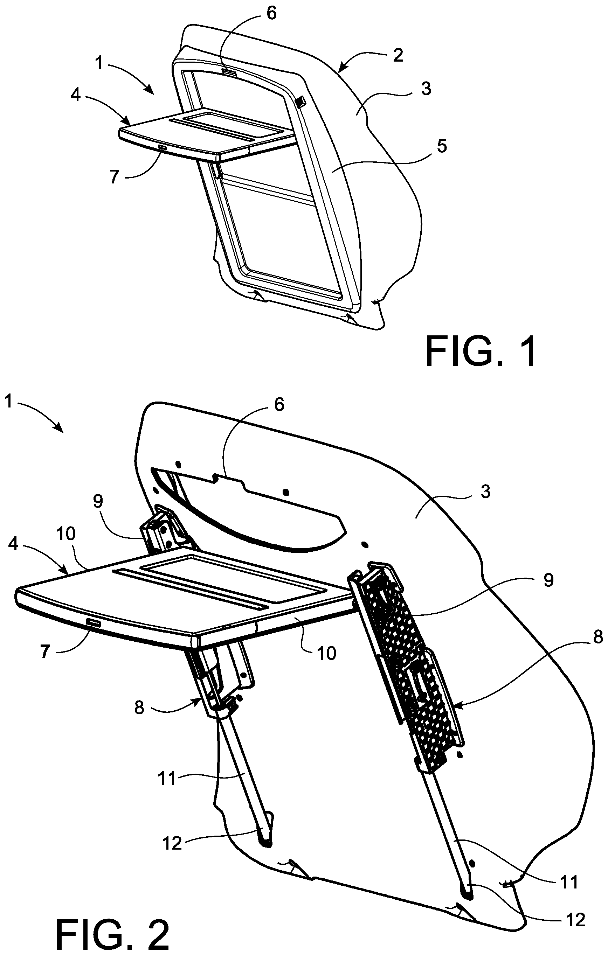

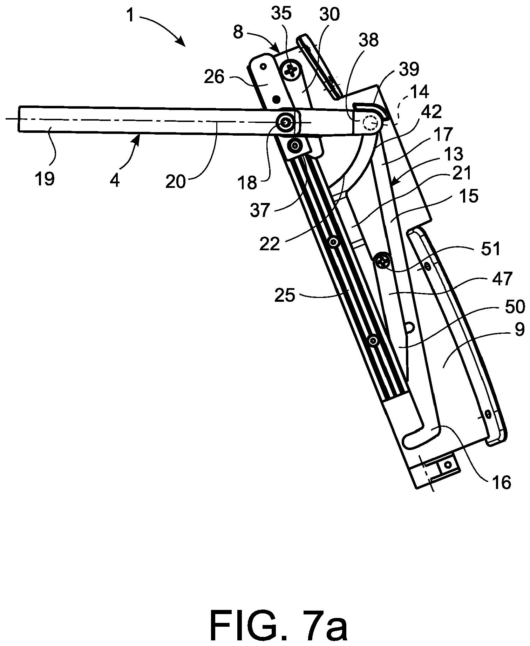

The invention will now be described with reference to embodiments of the invention and with reference to the appended drawings. With initial reference to Fig. 1, this figure shows a folding table arrangement 1 according to the invention. The figure is a perspective view of a vehicle seat back 2 provided with the folding table arrangement 1. In the shown embodiment, the folding table arrangement 1 is mounted on a separate plastic fastening panel 3 intended to be made available to car owners as an aftermarket accessory. Of course, the folding table arrangement 1 may alternatively be mounted directly to a vehicle seat back 2. A table leaf unit 4 is movably arranged between a stowed position (not shown) and a substantially horizontal in-use position as shown in Fig. 1. A plastic cover panel 5 is mounted on the fastening panel 3 and houses a table leaf release mechanism 6 which is arranged to engage with a table leaf retention slot 7 on the table leaf unit 4 when the table leaf unit 4 is in its upright stowed position. The table leaf release mechanism 6 is also operatively connected to an upper locking latch 30 for the table leaf unit 4 which will be described I further detail below and with reference to Fig. 7a.

In the enlarged perspective view of Fig. 2, the cover panel 5 has been removed in order to display a folding mechanism 8. The folding mechanism 8 includes support brackets 9 positioned on each lateral side 10 of the table leaf unit 4 and fastened to the fastening panel 3 as shown in the figure or alternatively directly to the seat back 2. Preferably the support brackets 9 may be moulded in a suitable lightweight polymer material but may alternatively be moulded in metal. The folding mechanism 8 further includes two biasing members 11, preferably in the form of gas cylinder piston assemblies fastened to the fastening panel 3 at their distal ends 12 as shown in the Fig. 2 or alternatively directly to the seat back 2. The cover panel 5 - as seen in Fig. 1 - normally fully covers the biasing members 11, the function of which will be described further below in this description.

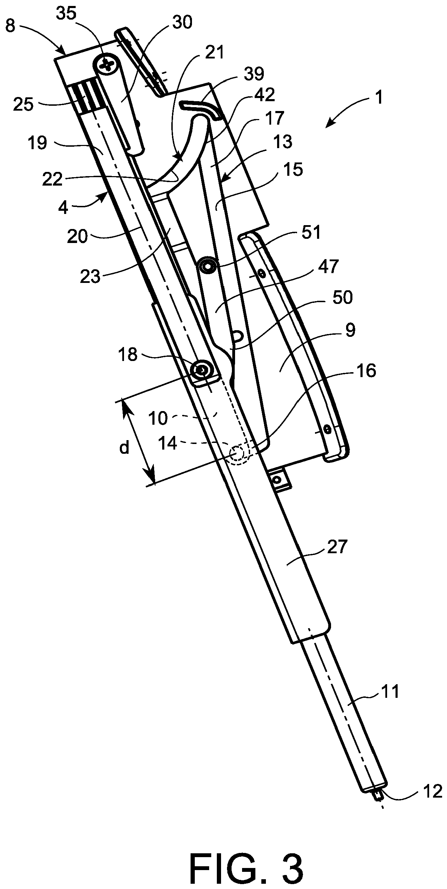

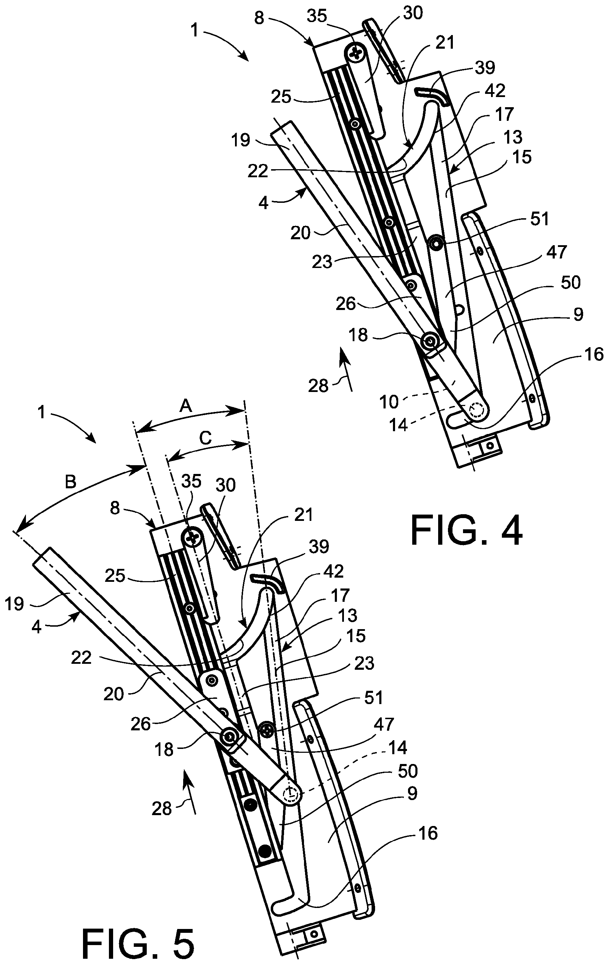

In Fig. 3 the left half of the folding mechanism 8 is shown in a side view where the table leaf unit 4 is shown in its stowed upright position. The fastening panel 3 and vehicle seat back 2 have been removed for the sake of clarity, although the folding mechanism 8 is shown in an angled position at an angle corresponding to the normal inclination of a vehicle seat back 2. The right half of the folding mechanism 8 is similar to the one shown, but is formed as a mirror image of the left one. The support bracket 9 shown in the figure is provided with a guide rail 13 adapted for sliding engagement with a guide pin 14 protruding from each lateral side 10 of the table leaf unit 4. In Fig. 3, the lateral side 10 of the table leaf unit 4 is facing into the plane of the drawing and is indicated with a dashed line from reference numeral 10. The guide rail 13 includes a fold-out track 15 extending upwardly from a lower end 16 to an upper end 17 thereof, said lower end 16 forming a parking position for the guide pin 14 in said stowed position of the table leaf unit 4. According to the invention two coaxially arranged swivel pins 18, one protruding from each lateral side 10 of the table leaf unit 4, are provided at an axial distance d from and parallel with said guide pins 14. In the figure the table leaf unit 4 is illustrated without the actual table leaf as such and only shows a table leaf support tube 19 which is mounted within the table leaf in the direction of the dash-dotted line 20. The guide rail 13 further includes a separate fold-in return track 21 having a curved upper track section 22, the mean radius of which corresponds to the axial distance d between the swivel pin 18 and the guide pin 14. The fold-in return track 21 also includes a substantially straight lower track section 23 ending in said parking position for the guide pin 14 in the stowed position of the table leaf unit 4. Fig. 3 also shows that the swivel pin 18 is operationally connected to the biasing member 11 which was introduced in the description of Fig. 2 above. The biasing member 11 is adapted to force-bias said swivel pin 18 in an upward direction. As can be seen in Fig. 4, this upward direction is defined by a swivel pin guide rail 24 provided on said support bracket 9. This swivel pin guide rail 25 is almost entirely hidden under a cover plate 27 in Fig. 3. The Cover plate 27 as well as the biasing member 11 is, however, removed in Fig. 4 for added clarity. The swivel pin 18 is hinged in a slide block 26 adapted to move along the swivel pin guide rail 25, said slide block 26 being operatively connected to said biasing member 11. Preferably the biasing member 11 is a gas cylinder piston assembly of a well known and widely used generic type per se. In an alternative embodiment of the invention the biasing member 24 may instead include a spring biased piston assembly (not shown).

With reference now to Fig. 4, the guide pin 14 on the table leaf unit 4 has now just been brought from the parking position at the lower end 16 of the fold-out track 15. This position corresponds to a passenger just having pressed the table leaf release mechanism 6, which is not shown in Fig. 4 but has been shown and described in Fig. 1. The table leaf unit 4 is now released by the table leaf release mechanism 6 (see Fig. 1) and the biasing member 24, although not shown in Fig. 4, now pushes the slide block 26 and hence also the swivel pin 18 upwards in the direction of arrow 28.

In Fig. 5, the slide block 26 and the swivel pin 18 have been pushed further up along the swivel pin guide rail 25 and the guide pin 14 has consequently followed upwards in the fold-out track 15. In a preferred embodiment of the invention, the fold-out track and the swivel pin guide rail are angled relative to each other. The relative angle A between the fold-out track 15 and the swivel pin guide rail 25 is between 3-15 degrees and preferably between 5-8 degrees. As can be gleaned from Fig. 5, this relative angle A results in a gradual increase of a fold-out angle B between the swivel pin guide rail 25 and the table leaf unit 4 as the biasing member 11 forces the slide block 26 and the swivel pin 18 upwardly. Similarly, when a passenger tilts the table leaf unit 4 upwards in order to bring it back to its stowed position (see Fig. 3) he or she will have to exert a modest counter force to the biasing force from the biasing member 11 which strives to keep the table leaf unit 4 in its substantially horizontal in-use position. It should also be noted that the straight lower track section 23 of the fold-in return track 21 extends in parallel with - and immediately next to - the swivel pin guide rail 25. Hence, the relative angle C between the straight lower section 23 of the fold-in return track 21 and the fold-out track 15 is the same as the relative angle A between the fold-out track 15 and the swivel pin guide rail 25.

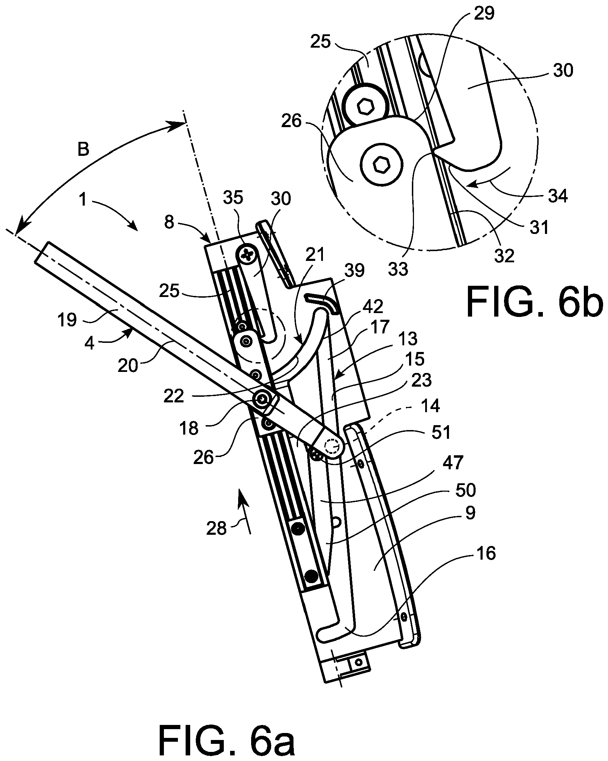

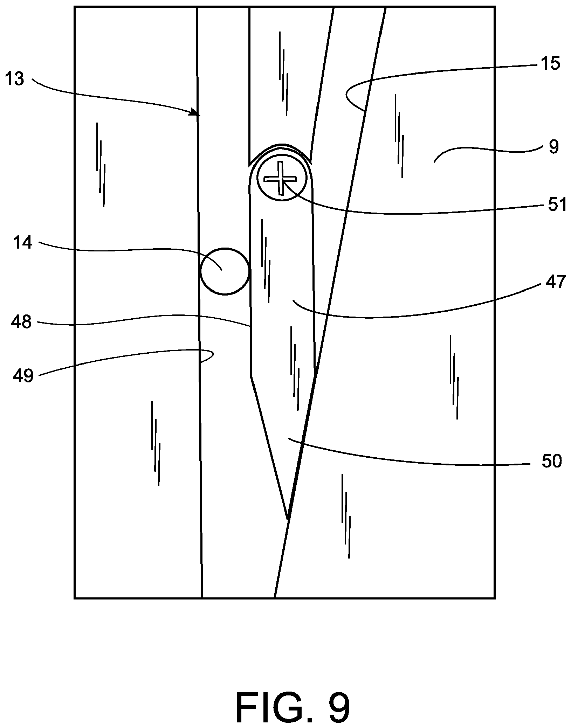

In Fig. 6a, the slide block 26 and the swivel pin 18 has been pushed further up along the swivel pin guide rail 25 by the biasing member 11 compared to the view in Fig. 5. Consequently, the guide pin 14 has progressed further up more than half-way along the fold-out track 15 and thus the fold-out angle B between the swivel pin guide rail 25 and the table leaf unit 4 has been further increased.
At this stage, as seen in the enlarged view of Fig. 6b a rounded upper contact surface 29 of the slide block 26 makes contact with a spring-biased upper locking latch 30. As the biasing member 11 forces the slide block 26 further upwards, the rounded upper contact surface 29 forces a slanted engagement surface 31 on the locking latch 30 to ride up on a straight side surface 32 of the slide block 26 until a tip 33 of the locking latch slides along said straight side surface. The locking latch is still spring-biased in the direction of arrow 34. As shown in Fig. 6a, the upper locking latch 30 is hinged around a hinge pin 35 protruding from the support bracket 9 and is spring-biased with a spring element in the shape of a leaf spring 54 on the reverse side of the support bracket 9, which will later be described with reference to Fig. 9.

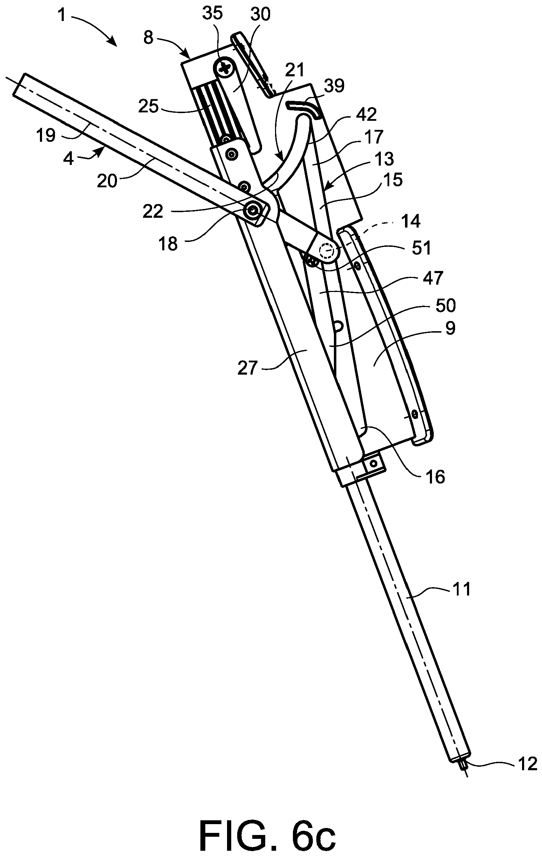

Fig. 6c shows the same position as in Fig. 6a, but in this figure the cover plate 27 and the biasing member 11 is shown as well. In this view, the cover plate 27 obscures the slide block 26 and the tip 33 of the upper locking latch 30. The cover plate 27 is secured to the sliding block 26 with two fastening screws 36.

Fig. 7a shows the table leaf unit 4 in its final, substantially horizontal in-use position. Here, the sliding block 26 has reached its uppermost position in the straight swivel pin guide rail 25 and the upper locking latch 30 has engaged a lower edge 37 of the slide block 26. Hence, the upper locking latch 30 is adapted to secure the slide block 26 in an upper position in the swivel pin guide rail when the table leaf unit 4 is in its in-use position. The upper locking latch 30 is operatively connected to the table-leaf release mechanism 6 as initially described with reference to Fig. 1. As seen in Fig. 7a, the guide pin 14 has now left the fold-out track 15 and entered the top end of the curved upper track section 22 of the fold-in return track 2. Here, an end portion 38 of the table-leaf unit 4 abuts an end-position abutment stop 39 which provides a positive movement stop for the table-leaf unit 4. When a passenger wishes to fold the table leaf unit 4 back into its stowed position, he or she tilts up the table leaf unit 4 which is operatively connected to the upper locking latch 30 in such a way that the upper locking latch 30 is rotated counter clockwise around the hinge pin 35 and thus disengages the tip 33 of the locking latch 30 from the lower edge 37 of the slide block 26. Now the slide block 26 is free to be pushed.

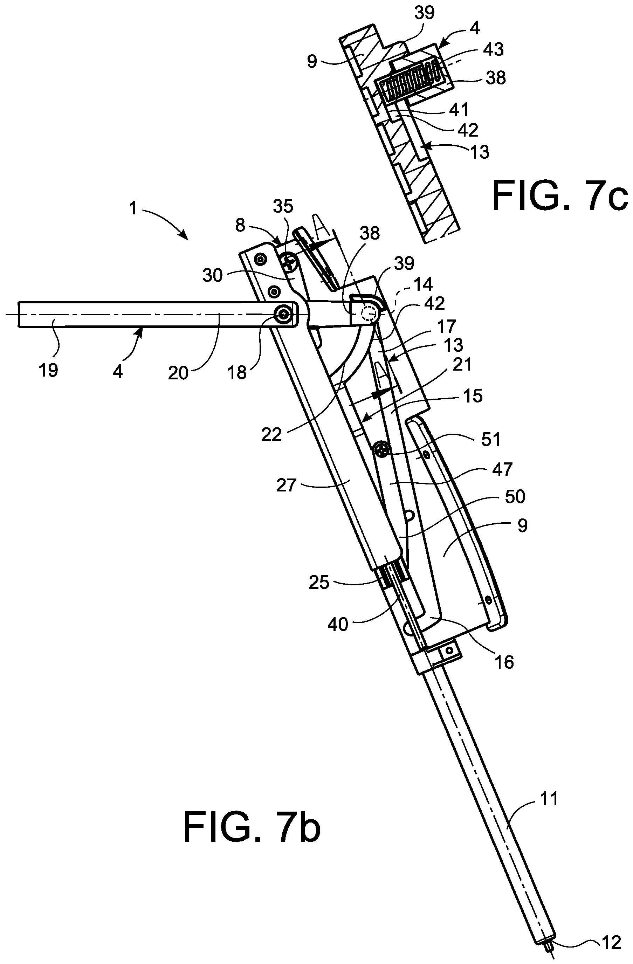

The view seen in Fig. 7b is similar to the one in Fig. 7a, only here the cover plate 27 and the biasing member 11 is incorporated to give a more complete understanding of the folding mechanism 8. In this view a piston 40 of the biasing member 11 is visible. The piston 40 is connected to the slide block 26 which is hidden under the cover plate 27 in this view.

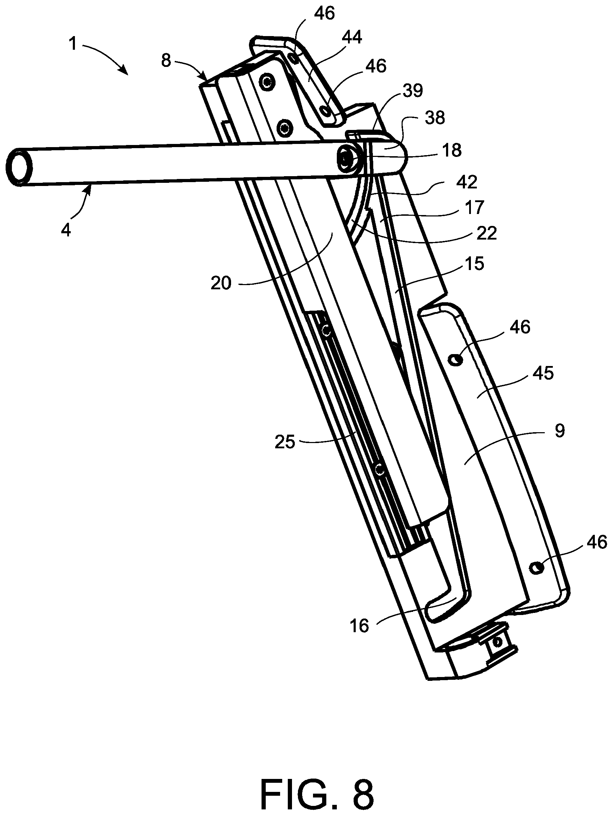

With reference to Fig. 7c, which is a cross-sectional view along the line A-A in Fig. 7b, the guide pin 18 is spring biased towards a bottom surface 41 of the guide rail 13. Furthermore, the fold-in return track 21 at least partially extends in a different plane than the fold-out track 15, forming a negative step 42 for the guide pin 14 where it leaves the fold-out track 15 and enters the fold-in return track 21. This physically prevents the guide pin 14 from re-entering the fold-out track 15 once it has passed said step 42. As seen in the cross-sectional view, the guide pin 14 is spring biased towards a bottom surface 41 of the guide rail 13 by means of a spring member 43 mounted in the end portion 38 of table leaf unit 4. The negative step 42 is also visible in Fig. 7b and even more clearly in the perspective view of Fig. 8. This figure also shows an upper fastening wing 44 and a lower fastening wing 45 formed in the support bracket 9, both having holes 46 for fastening screws (not shown) for securing the support bracket 9 to the vehicle seat back 2 (not shown in this figure).

Fig. 9 shows a cut-out simplified view of a track-switching member 47 being pushed aside by the guide pin 14 on its way downwards along the straight lower section 23 of the guide rail 13. As seen in the figure, the track switching member 47 is located in the straight lower track section 23 of the fold-in return track 21. The track switching member 47 has a guide surface 48 and is spring-biased towards an opposite side surface 49 of the fold-in return track 2. Furthermore, the track-switching member 47 has a wedge shaped end portion 50 and is arranged to be turned about axis stud 51 which is fastened in the support bracket 9.

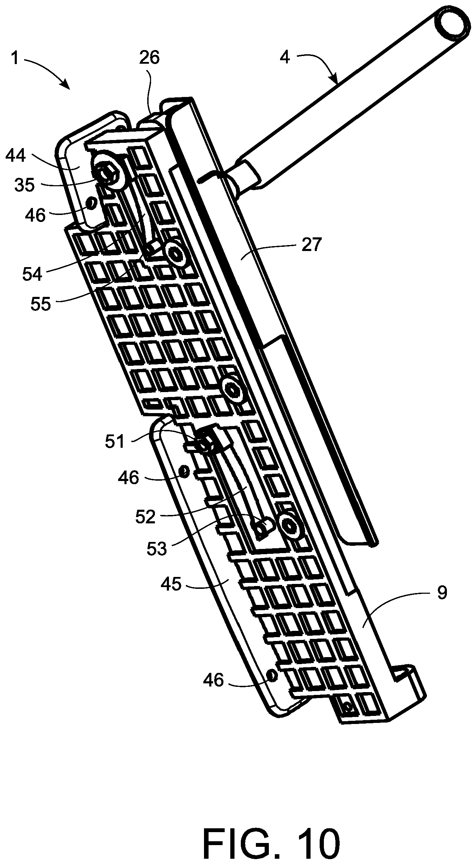

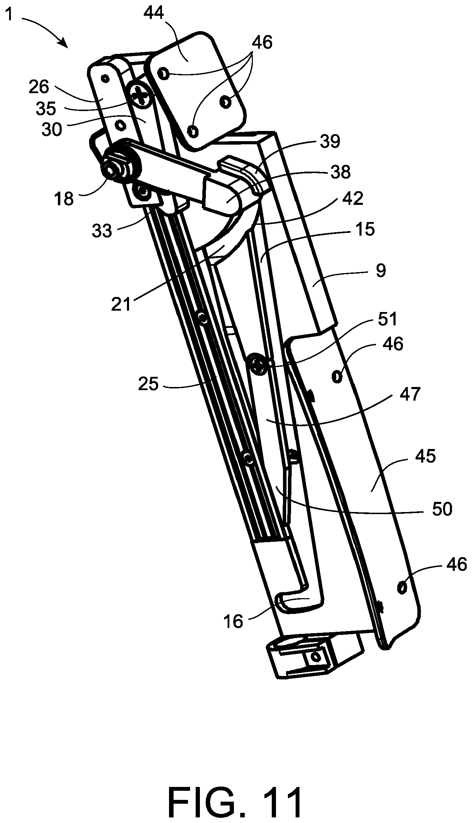

As seen in Fig. 10 the track-switching member 47 is spring-biased by a leaf spring 52 which presses on a pin-shaped projection 53 on the reverse side of the track-switching member 47. The leaf spring 52 is fixedly attached in the support bracket 9. In a similar way, the upper locking latch 30 is spring-biased by a leaf-spring 54 which presses on a pin-shaped projection 55 on the reverse side of said upper locking latch 30. Again, In Fig. 11, the leaf spring 52 is fixedly attached in the support bracket 9.

Referring back to Fig. 9 again, the track switching member 47 is adapted to let the guide pin 14 pass on its way along the straight lower track section 23 of the fold-in return track 21 and then snap back towards said opposite side surface 49 of the fold-in return track 23 when the guide pin 14 has passed the track switching member 47 into the parking position for the guide pin 14 in the stowed position of the table leaf unit 4. Hence this prevents the guide pin 14 from re-entering the fold-in return track 21 once it has passed the track switching member 47 and now only leaves the fold-out track 15 open for subsequent fold-out of the table leaf unit 4.

Due to the novel arrangement with a separate fold-out track 15 and fold-in return track 21 shaped as described above, the table leaf unit 4 is folded out in such a way that it conveniently avoids contact with the passenger's knees (not shown) when it is folded out and follows another path when folded back into its stowed position which makes it easier for the passenger to stow the table leaf unit 4 with decreased effort needed to counteract the upwardly biasing force from the biasing members 11. Hence, the passenger stows the table leaf unit 4 in a simple three step movement pattern including the following simple sequence:
1. tilting up the table leaf unit 4;
2. pushing the table unit 4 downwards, and
3. pressing the table unit 4 against the vehicle seat back 2 until the table leaf release mechanism 6 engages the table leaf retention slot 7 (as seen in Figs. 1 and 2).

In the above description of the invention, only one of the two support brackets 9 and related parts have been illustrated. As shown in Figs. 1 and 2 however, the folding mechanism 8 includes two oppositely positioned support brackets 9 which are identical in function but mirror-imaged relative to each other as they are located on each lateral side 10 of the table leaf unit 4.

It is to be understood that the present invention is not limited to the embodiments described above and illustrated in the drawings; rather, the skilled person will recognize that many changes and modifications may be made within the scope of the appended claims.

## Claims

1. A folding table arrangement (1) for a vehicle seat back (2) including:
- a table leaf unit (4) which is movable between a stowed position and a substantially horizontal in-use position;
- two support brackets (9) positioned on each lateral side (10) of the table leaf unit (4), each support bracket (9) being provided with a guide rail (13) adapted for sliding engagement with a guide pin (14) protruding from each lateral side (10) of the table leaf unit (4), the guide rail (13) further including a fold-out track (15) extending upwardly from a lower end (16) to an upper end (17) thereof, said lower end (16) forming a parking position for the guide pin (14) in said stowed position of the table leaf unit (4);
**characterized in that**
- two coaxially arranged swivel pins (18), one protruding from each lateral side (10) of the table leaf unit (4), are provided at a distance (d) from and parallel with said guide pins (14);
- the guide rail (13) further includes a separate fold-in return track (21) having a curved upper track section (22), the mean radius of which corresponds to the axial distance (d) between the swivel pin (18) and the guide pin (14);
- said fold-in return track (21) also includes a substantially straight lower track section (23) ending in said parking position for the guide pin (14) in the stowed position of the table leaf unit (4).

2. A folding table arrangement (1) for a vehicle seat back (2) according to claim 1, **characterized in that** the guide pin (14) is spring biased towards a bottom surface (41) of the guide rail (13), and that said fold-in return track (21) at least partially extends in a different plane than the fold-out track (15), forming a negative step (42) for the guide pin (14) where it leaves the fold-out track (15) and enters the fold-in return track (21), hence preventing the guide pin (14) from re-entering the fold-out track (15) once it has passed said negative step (42).

3. A folding table arrangement (1) for a vehicle seat back (2) according to claim 2, **characterized in that** the guide pin (14) is spring biased towards a bottom surface of the guide rail (13) by means of a spring member (43) mounted in the table leaf unit (4).

4. A folding table arrangement (1) for a vehicle seat back (2) according to claim 1, **characterized in that** said swivel pin (18) is operationally connected to a biasing member (11) adapted to force-bias said swivel pin (18) in an upward direction defined by a swivel pin guide rail (25) provided on said support bracket (9).

5. A folding table arrangement (1) for a vehicle seat back (2) according to claim 4, **characterized in that** each swivel pin (18) is hinged in a slide block (26) adapted to move along the swivel pin guide rail (25), said slide block (26) being operatively connected to said biasing member (11).

6. A folding table arrangement (1) for a vehicle seat back (2) according to claim 5, **characterized in that** the fold-out track (15) and the swivel pin guide rail (25) are angled relative to each other.

7. A folding table arrangement (1) for a vehicle seat back (2) according to claim 5, **characterized in that** the relative angle (A) between the fold-out track (15) and the swivel pin guide rail (25) is between 3-15 degrees.

8. A folding table arrangement (1) for a vehicle seat back (2) according to claim 7, **characterized in that** the relative angle (A) between the fold-out track (15) and the swivel pin guide rail (25) is between 5-8 degrees.

9. A folding table arrangement (1) for a vehicle seat back (2) according to claim 4 or 5, **characterized in that** each biasing member (11) is a gas cylinder piston assembly.

10. A folding table arrangement (1) for a vehicle seat back (2) according to claim 4 or 5, **characterized in that** each biasing member (11) is a spring biased piston assembly.

11. A folding table arrangement (1) for a vehicle seat back (2) according to any of the preceding claims, **characterized in that**:
- a track switching member (47) is located in the straight lower track section (23) of the fold-in return track (21), said track switching member (47) having a guide surface (48) being spring-biased towards an opposite side surface (49) of the fold-in return track (21) and having a wedge shaped end portion (59);
- said track switching member (47) being adapted to let the guide pin (14) pass on its way along the straight lower track section (23) of the fold-in return track (21) and snap back towards said opposite side surface (49) of the fold-in return track (21) when the guide pin (14) has passed the track switching member (47) into the parking position for the guide pin (14) in the stowed position of the table leaf unit (4), hence preventing the guide pin (14) from re-entering the fold-in return track (21) once it has passed the track switching member (47).

12. A folding table arrangement (1) for a vehicle seat back (2) according to any of the preceding claims, **characterized in that** a spring-biased upper locking latch (30) is adapted to secure the slide block (26) in an upper position in the swivel pin guide rail (25) when the table leaf unit (4) is in its in-use position.

13. A folding table arrangement (1) for a vehicle seat back (2) according to claim 12, **characterized in that** said upper locking latch (30) is operatively connected to a table-leaf release mechanism (6) adapted to be operated by a user when the table leaf unit (4) is to be folded back into its stowed position.

## Patentansprüche

1. Klapptischanordnung (1) für eine Fahrzeugsitzrückenlehne (2), umfassend:
- eine Tischplatteneinheit (4), die zwischen einer Verstauungsstellung und einer im Wesentlichen horizontalen Gebrauchsstellung bewegbar ist,
- zwei Stützhalterungen (9), die auf jeder Seite (10) der Tischplatteneinheit (4) positioniert sind, wobei jede Stützhalterung (9) mit einer Führungsschiene (13) versehen ist, die zum gleitenden Eingriff mit einem Führungsstift (14) geeignet ist, der von jeder Seite (10) der Tischplatteneinheit (4) vorsteht, wobei die Führungsschiene (13) ferner eine ausklappbare Schiene (15) umfasst, die sich von einem unteren Ende (16) zu einem oberen Ende (17) derselben nach oben erstreckt, wobei das untere Ende (16) in der Verstauungsstellung der Tischplatteneinheit (4) eine Parkstellung für den Führungsstift (14) bildet,
**dadurch gekennzeichnet, dass**
- zwei koaxial angeordnete Drehzapfen (18), die jeweils von jeder Seite (10) der Tischplatteneinheit (4) vorstehen, in einem Abstand (d) von den Führungsstiften (14) und parallel zu diesen vorgesehen sind,
- die Führungsschiene (13) ferner eine separate einklappbare Rückführungsschiene (21) umfasst, die einen gekrümmten oberen Schienenabschnitt (22) aufweist, dessen mittlerer Radius dem axialen Abstand (d) zwischen dem Drehzapfen (18) und dem Führungsstift (14) entspricht,
- die einklappbare Rückführungsschiene (21) außerdem einen im Wesentlichen geraden unteren Schienenabschnitt (23) umfasst, der in der Verstauungsstellung der Tischplatteneinheit (4) in der Parkstellung für den Führungsstift (14) endet.

2. Klapptischanordnung (1) für eine Fahrzeugsitzrückenlehne (2) nach Anspruch 1, **dadurch gekennzeichnet, dass** der Führungsstift (14) gegen eine untere Fläche (41) der Führungsschiene (13) federvorgespannt ist und dass sich die einklappbare Rückführungsschiene (21) wenigstens zum Teil in einer anderen Ebene als die ausklappbare Schiene (15) erstreckt und eine Negativstufe (42) für den Führungsstift (14) dort bildet, wo er die ausklappbare Schiene (15) verlässt und in die ausklappbare Rückführungsschiene (21) eintritt, und somit verhindert, dass der Führungsstift (14) erneut in die ausklappbare Schiene (15) eintritt, nachdem er die Negativstufe (42) passiert hat.

3. Klapptischanordnung (1) für eine Fahrzeugsitzrückenlehne (2) nach Anspruch 2, **dadurch gekennzeichnet, dass** der Führungsstift (14) mittels eines in der Tischplatteneinheit (4) befestigten Federelements (43) gegen eine untere Fläche der Führungsschiene (13) federvorgespannt ist.

4. Klapptischanordnung (1) für eine Fahrzeugsitzrückenlehne (2) nach Anspruch 1, **dadurch gekennzeichnet, dass** der Drehzapfen (18) mit einem Vorspannelement (11) wirkverbunden ist, das geeignet ist, den Drehzapfen (18) in einer nach oben verlaufenden Richtung zwangsvorzuspannen, die durch eine Drehzapfenführungsschiene (25) festgelegt ist, die auf der Stützhalterung (9) vorgesehen ist.

5. Klapptischanordnung (1) für eine Fahrzeugsitzrückenlehne (2) nach Anspruch 4, **dadurch gekennzeichnet, dass** jeder Drehzapfen (18) gelenkig in einem Gleitstein (26) angebracht ist, der geeignet ist, sich entlang der Drehzapfenführungsschiene (25) zu bewegen, wobei der Gleitstein (26) mit dem Vorspannelement (11) wirkverbunden ist.

6. Klapptischanordnung (1) für eine Fahrzeugsitzrückenlehne (2) nach Anspruch 5, **dadurch gekennzeichnet, dass** die ausklappbare Schiene (15) und die Drehzapfenführungsschiene (25) relativ zueinander abgewinkelt sind.

7. Klapptischanordnung (1) für eine Fahrzeugsitzrückenlehne (2) nach Anspruch 5, **dadurch gekennzeichnet, dass** der relative Winkel (A) zwischen der ausklappbaren Schiene (15) und der Drehzapfenführungsschiene (25) zwischen 3 und 15 Grad liegt.

8. Klapptischanordnung (1) für eine Fahrzeugsitzrückenlehne (2) nach Anspruch 7, **dadurch gekennzeichnet, dass** der relative Winkel (A) zwischen der ausklappbaren Schiene (15) und der Drehzapfenführungsschiene (25) zwischen 5 und 8 Grad liegt.

9. Klapptischanordnung (1) für eine Fahrzeugsitzrückenlehne (2) nach Anspruch 4 oder 5, **dadurch gekennzeichnet, dass** jedes Vorspannelement (11) eine Gaszylinderkolbenanordnung ist.

10. Klapptischanordnung (1) für eine Fahrzeugsitzrückenlehne (2) nach Anspruch 4 oder 5, **dadurch gekennzeichnet, dass** jedes Vorspannelement (11) eine federvorgespannte Kolbenanordnung ist.

11. Klapptischanordnung (1) für eine Fahrzeugsitzrückenlehne (2) nach einem der vorhergehenden Ansprüche, **dadurch gekennzeichnet, dass**
- sich ein Schienenumschaltelement (47) in dem geraden unteren Schienenabschnitt (23) der einklappbaren Rückführungsschiene (21) befindet, wobei das Schienenumschaltelement (47) eine Führungsfläche (48) aufweist, die gegen eine gegenüberliegende Seitenfläche (49) der einklappbaren Rückführungsschiene (21) federvorgespannt ist und einen keilförmigen Endabschnitt (59) aufweist,
- wobei das Schienenumschaltelement (47) geeignet ist, den Führungsstift (14) auf seinem Weg entlang dem geraden unteren Schienenabschnitt (23) der einklappbaren Rückführungsschiene (21) passieren und gegen die gegenüberliegende Seitenfläche (49) der einklappbaren Rückführungsschiene (21) ausrücken zu lassen, wenn der Führungsstift (14) das Schienenumschaltelement (47) zu der Parkstellung für den Führungsstift (14) in der Verstauungsstellung der Tischplatteneinheit (4) passiert hat, und somit der Führungsstift (14) daran gehindert wird, erneut in die einklappbare Rückführungsschiene (21) einzutreten, nachdem er das Schienenumschaltelement (47) passiert hat.

12. Klapptischanordnung (1) für eine Fahrzeugsitzrückenlehne (2) nach einem der vorhergehenden Ansprüche, **dadurch gekennzeichnet, dass** ein federvorgespannter oberer Verschlussriegel (30) dazu geeignet ist, den Gleitstein (26) in einer oberen Stellung in der Drehzapfenführungsschiene (25) zu sichern, wenn sich die Tischplatteneinheit (4) in ihrer Gebrauchsstellung befindet.

13. Klapptischanordnung (1) für eine Fahrzeugsitzrückenlehne (2) nach Anspruch 12, **dadurch gekennzeichnet, dass** der obere Verschlussriegel (30) mit einem die Tischplatte lösenden Mechanismus (6) wirkverbunden ist, der geeignet ist, von einem Benutzer bedient zu werden, wenn die Tischplatteneinheit (4) zurück in ihre Verstauungsstellung geklappt werden soll.

## Revendications

1. Agencement (1) de tablette pliante pour dossier (2) de siège de véhicule, comprenant :
- une unité (4) de panneau de tablette qui est mobile entre une position de rangement et une position horizontale d'utilisation ;
- deux supports (9) placés sur chaque côté latéral (10) de l'unité (4) de panneau de tablette, chaque support (9) étant pourvu d'une glissière de guidage (13) apte à être en prise coulissante avec une tige-guide (14) qui dépasse de chaque côté latéral (10) de l'unité (4) de panneau de tablette, la glissière de guidage (13) comprenant en outre une piste (15) de dépliage s'étendant vers le haut d'une extrémité inférieure (16) à son extrémité supérieure (17), ladite extrémité inférieure (16) constituant une position de repos pour la tige-guide (14) dans ladite position de rangement de l'unité (4) de panneau de tablette, **caractérisé en ce que** :
- deux axes de pivotement (18) disposés coaxialement, chacun dépassant d'un côté latéral (10) de l'unité (4) de panneau de tablette, sont disposés à une distance (d) desdites tiges-guides (14) et parallèlement à celles-ci ;
- la glissière de guidage (13) comprend en outre une piste séparée (21) de retour à la position repliée, comportant une section supérieure (22) de piste courbe, dont le rayon moyen correspond à l'entraxe (d) entre l'axe de pivotement (18) et la tige-guide (14) ;
- ladite piste (21) de retour à la position repliée comprend aussi une section inférieure (23) de piste sensiblement droite qui se termine dans ladite position de repos pour la tige-guide (14) dans la position de rangement de l'unité (4) de panneau de tablette.

2. Agencement (1) de tablette pliante pour dossier (2) de siège de véhicule selon la revendication 1, **caractérisé en ce que** la tige-guide (14) est sollicitée par ressort vers une surface inférieure (41) de la glissière de guidage (13), et **en ce que** ladite piste (21) de retour à la position repliée s'étend au moins partiellement dans un plan différent de celui de la piste (15) de dépliage, constituant une encoche (42) pour la tige-guide (14) quand elle quitte la piste (15) de dépliage et entre dans la piste (21) de retour à la position repliée, empêchant donc la tige-guide (14) d'entrer à nouveau dans la piste (15) de dépliage une fois qu'elle a dépassé ladite encoche (42).

3. Agencement (1) de tablette pliante pour dossier (2) de siège de véhicule selon la revendication 2, **caractérisé en ce que** la tige-guide (14) est sollicitée par ressort vers une surface inférieure de la glissière de guidage (13) au moyen d'un élément de ressort (43) monté dans l'unité (4) de panneau de tablette.

4. Agencement (1) de tablette pliante pour dossier (2) de siège de véhicule selon la revendication 1, **caractérisé en ce que** ledit axe de pivotement (18) est raccordé fonctionnellement à un élément de sollicitation (11) apte à forcer ledit axe de pivotement (18) dans une direction vers le haut définie par une glissière de guidage (25) d'axe de pivotement disposée sur ledit support (9).

5. Agencement (1) de tablette pliante pour dossier (2) de siège de véhicule selon la revendication 4, **caractérisé en ce que** chaque axe de pivotement (18) est articulé dans un coulisseau (26) apte à se déplacer le long de la glissière de guidage (25) d'axe de pivotement, ledit coulisseau (26) étant raccordé fonctionnellement audit élément de sollicitation (11).

6. Agencement (1) de tablette pliante pour dossier (2) de siège de véhicule selon la revendication 5, **caractérisé en ce que** la piste (15) de dépliage et la glissière de guidage (25) d'axe de pivotement forment entre elles un angle.

7. Agencement (1) de tablette pliante pour dossier (2) de siège de véhicule selon la revendication 5, **caractérisé en ce que** l'angle relatif (A) entre la piste (15) de dépliage et la glissière de guidage (25) d'axe de pivotement est compris entre 3 et 15 degrés.

8. Agencement (1) de tablette pliante pour dossier (2) de siège de véhicule selon la revendication 7, **caractérisé en ce que** l'angle relatif (A) entre la piste (15) de dépliage et la glissière de guidage (25) d'axe de pivotement est compris entre 5 et 8 degrés.

9. Agencement (1) de tablette pliante pour dossier (2) de siège de véhicule selon la revendication 4 ou 5, **caractérisé en ce que** chaque élément de sollicitation (11) est un ensemble cylindre à gaz-piston.

10. Agencement (1) de tablette pliante pour dossier (2) de siège de véhicule selon la revendication 4 ou 5, **caractérisé en ce que** chaque élément de sollicitation (11) est un ensemble piston sollicité par ressort.

11. Agencement (1) de tablette pliante pour dossier (2) de siège de véhicule selon l'une quelconque des revendications précédentes, **caractérisé en ce que** :
- un élément (47) de changement de piste est situé dans la section inférieure (23) de piste droite de la piste (21) de retour à la position repliée, ledit élément (47) de changement de piste comportant une surface de guidage (48) qui est sollicitée par ressort vers une surface latérale (49) opposée de la piste (21) de retour à la position repliée et comporte une partie terminale (59) en forme de coin ;
- ledit élément (47) de changement de piste étant apte à laisser la tige-guide (14) continuer son chemin le long de la section inférieure (23) de piste droite de la piste (21) de retour à la position repliée et revenir brusquement vers ladite surface latérale (49) opposée de la piste (21) de retour à la position repliée quand la tige-guide (14) a dépassé l'élément (47) de changement de piste pour entrer dans la position de repos pour la tige-guide (14) dans la position de rangement de l'unité (4) de panneau de tablette, empêchant donc la tige-guide (14) d'entrer à nouveau dans la piste (21) de retour à la position repliée une fois qu'elle a dépassé l'élément (47) de changement de piste.

12. Agencement (1) de tablette pliante pour dossier (2) de siège de véhicule selon l'une quelconque des revendications précédentes, **caractérisé en ce qu'**un loquet supérieur de verrouillage (30) sollicité par ressort est apte à bien fixer le coulisseau (26) dans une position supérieure dans la glissière de guidage (25) d'axe de pivotement quand l'unité (4) de panneau de tablette est dans sa position d'utilisation.

13. Agencement (1) de tablette pliante pour dossier (2) de siège de véhicule selon la revendication 12, **caractérisé en ce que** ledit loquet supérieur de verrouillage (30) est raccordé fonctionnellement à un mécanisme de libération (6) de panneau de tablette apte à être mis en oeuvre par un utilisateur quand il doit replier l'unité (4) de panneau de tablette dans sa position de rangement.
